# EUROPEAN PATENT APPLICATION

(11) **EP 4 477 584 A1**
(43) Date of publication of application: **18.12.2024**
(21) Application number: 24181334.4
(22) Date of filing: 11.06.2024
(51) Int. Cl.: B65G 47/08, B65B 5/10, B65B 35/30, B65B 35/36, B65G 47/32

(54) **ARTICLE TRANSFER APPARATUS**

(30) Priority: 16.06.2023 JP 2023099556
(71) Applicant: Ishida Co., Ltd., Kyoto-shi Kyoto 606-8392 (JP)
(72) Inventor: SATA, Kohei, Shiga, 520-3026 (JP); HOJO, Masaaki, Shiga, 520-3026 (JP); TAKEOKA, Masashi, Shiga, 520-3026 (JP); ARIMATSU, Tatsuya, Shiga, 520-3026 (JP); OKANO, Hiroshi, Shiga, 520-3026 (JP); YOKOTA, Yuji, Shiga, 520-3026 (JP)
(74) Representative: Kalhor-Witzel, Ronak

(57) **Abstract**

It is a problem of the present disclosure to provide an article transfer apparatus that can maintain the processing capacity of a transport mechanism at a fixed capacity regardless of the capacity at which articles are supplied from upstream. An article transfer apparatus (1) includes an infeed conveyor (12), an alignment conveyor (21), and an article transport unit (30). The infeed conveyor (12) conveys bags (G) in a first direction (X1). The alignment conveyor (21) lines up in a predetermined state a plurality of the bags (G) fed thereto from the infeed conveyor (12) to form an article group and simultaneously conveys them in a second direction (Y). The article transport unit (30) transports the article group to a container (51). A plurality of the article groups are formed on the alignment conveyor 21.

## Description

### TECHNICAL FIELD

The present disclosure relates to an article transfer apparatus.

### RELATED ART

In recent years, article transfer apparatus that group together a plurality of articles and transport them to a predetermined position have become widespread. For example, Patent Document 1 (JP-A No. 2017-154781) discloses an apparatus where articles conveyed thereto in one direction by a carrying conveyor are gripped by a first transport mechanism, transported onto an accumulating conveyor, form an article group, and are conveyed in the same direction. Thereafter, the article group is packed into a box by a second transport mechanism.

### SUMMARY

### TECHNICAL PROBLEM

However, in apparatus such as described above, an operation where the first transport mechanism grips the articles and lines them up on the accumulating conveyor is necessary, and when the articles are continuously conveyed from upstream, the first transport mechanism may not be able to keep up with the capacity at which the articles are supplied from upstream even if the processing capacity of the first transport mechanism is increased.

Therefore, an article transfer apparatus is desired which can maintain the processing capacity of a transport mechanism at a fixed capacity regardless of the capacity at which articles are supplied from upstream.

### SOLUTION TO PROBLEM

An article transfer apparatus of a first aspect includes a first conveyor, a second conveyor, and a transport mechanism. The first conveyor conveys articles in a first direction. The second conveyor lines up in a predetermined state a plurality of the articles fed thereto from the first conveyor to form an article group and simultaneously conveys them in a second direction. The transport mechanism transports the article group to a predetermined position. A plurality of the article groups are formed on the second conveyor.

In this article transfer apparatus, even in a case where the articles are continuously supplied from the first conveyor, a situation where the transport mechanism is pressed to transport the articles is avoided because the time in which the second conveyor aligns the articles gives the transport mechanism some time to spare. Furthermore, a situation where the articles are not supplied in time to the transport mechanism is also avoided because the article groups comprising aligned pluralities of the articles are temporarily retained on the second conveyor.

Furthermore, compared with conventional apparatus, the second conveyor lines up in a predetermined state a plurality of the articles fed thereto from the first conveyor to form an article group, so the conventional operation of gripping the articles one at a time and lining them up on a conveyor can be eliminated, thus enhancing processing capacity.

An article transfer apparatus of a second aspect is the article transfer apparatus of the first aspect, wherein the transport mechanism collectively grips and transports to the predetermined position the plurality of articles configuring the article group.

In this article transfer apparatus, there is not the conventional operation of gripping the articles one at a time and lining them up on a conveyor, and the transport mechanism collectively transports the plurality of articles in the article group formed by the second conveyor, so there are a fewer number of transports by the transport mechanism, and processing capacity is high.

An article transfer apparatus of a third aspect is the article transfer apparatus of the first aspect or the second aspect, wherein a first article group and a second article group are formed on the second conveyor as the article groups. The first article group is transported first by the transport mechanism. The second article group is transported by the transport mechanism after the first article group has been transported.

In this article transfer apparatus, the article group transported next is temporarily retained on the second conveyor, so the article groups can be supplied at stable intervals to the transport mechanism.

An article transfer apparatus of a fourth aspect is the article transfer apparatus of the third aspect, wherein a gap along the second direction is formed between the first article group and the second article group.

In this article transfer apparatus, when the transport mechanism transports the first article group, the articles in the second article group are kept from getting caught up by the transport mechanism.

An article transfer apparatus of a fifth aspect is the article transfer apparatus of any one of the first aspect to the fourth aspect, wherein each time the second conveyor catches one of the articles fed thereto from the first conveyor, it conveys that article a predetermined distance in the second direction to thereby line up a plurality of the articles in the predetermined state.

In this article transfer apparatus, the plural articles line up in a state in which a part of a trailing article contacts the upper surface of the second conveyor and the remaining part inclines against a preceding article to form the article group. Therefore, during transport, the transport mechanism can collectively grip and transport to the predetermined position the plurality of articles configuring the article group.

An article transfer apparatus of a sixth aspect is the article transfer apparatus of any one of the first aspect to the fifth aspect, further including a control unit that controls operations of the first conveyor and the second conveyor. A leading end portion of the first conveyor in the first direction extends and retracts parallel to the first direction. When the articles switch from a first position on the first conveyor to the second conveyor, the control unit changes the leading end portion of the first conveyor to a state in which it is retracted upstream of the first position in the first direction.

In this article transfer apparatus, when the articles switch from the first conveyor to the second conveyor, the first conveyor that had supported the lower surfaces of the articles is retracted and removed, so the articles land on the second conveyor while maintaining the orientation they have during the switch without having any time to incline. As a result, a disturbance in orientation is inhibited.

An article transfer apparatus of a seventh aspect is the article transfer apparatus of any one of the first aspect to the sixth aspect, wherein the first conveyor and the second conveyor are arranged in such a way that the first direction and the second direction intersect each other.

In this article transfer apparatus, the first conveyor and the second conveyor are arranged in such a way that their conveyance directions intersect each other, so the conveyance direction can be inhibited from becoming longer in the same direction.

(Particularly in a case where the first conveyor and the second conveyor are arranged in such a way that their conveyance directions are orthogonal to each other and the articles are bag products, by conveying the bags with the direction of the long sides of the bags aligned with the conveyance direction of the first conveyor, the direction of the short sides of the bags aligns with the conveyance direction of the second conveyor when the bags switch to the second conveyor, so a plurality of the bags can be densely accumulated, and transport efficiency improves.)

An article transfer apparatus of an eighth aspect is the article transfer apparatus of any one of the first aspect to the seventh aspect, wherein the first conveyor and the second conveyor are arranged in such a way that the first direction and the second direction are orthogonal to each other. The conveyance surface of the first conveyor is inclined relative to a horizontal plane in such a way that, when the articles switch from the first conveyor to the second conveyor, a plane including longitudinal and transverse directions of the articles is inclined about an axis of rotation along the first direction relative to the conveyance surface of the second conveyor, so that the orientation of each of the articles when switching from the first conveyor to the second conveyor is inclined in such a way that a part of the article that lands on the article already placed on the second conveyor is up and a part of the article that lands directly on the second conveyor is down.

In this article transfer apparatus, the orientation of each of the articles when switching from the first conveyor to the second conveyor is inclined in such a way that the part of the article that lands on the article already placed on the second conveyor is up while the part of the article that lands directly on the second conveyor is down, so the articles land on the second conveyor before or at the same time that they contact the articles placed before them. Additionally, the frictional force between the second conveyor and the articles exceeds the frictional force between the articles, so slippage between the articles is prevented and a disturbance in orientation is inhibited.

An article transfer apparatus of a ninth aspect is the article transfer apparatus of any one of the first aspect to the eighth aspect, further including an orientation changing unit which, by contacting the articles, changes to a predetermined orientation the orientation of the articles as they are being conveyed on the first conveyor.

In this article transfer apparatus, the articles are fed to the first conveyor in any of an orientation where the direction of their long sides is parallel to the conveyance direction, an orientation where the direction of their long sides intersects the conveyance direction, and an orientation where the direction of their short sides is parallel to the conveyance direction. By equipping the article transfer apparatus with the orientation changing unit, the orientation of the articles can be changed to a predetermined orientation regardless of the orientation of the articles when they are fed to the first conveyor. As a result, the operation where the second conveyor lines up in a predetermined state a plurality of the articles to form an article group becomes easy.

An article transfer apparatus of a tenth aspect is the article transfer apparatus of the seventh aspect, further including a third conveyor. The third conveyor is disposed in a substantially vertical orientation, so as to oppose a terminal end of the first conveyor, along a side surface of the second conveyor that is positioned further downstream in the conveyance direction of the first conveyor among side surfaces of the second conveyor. The conveyance surface of the third conveyor advances synchronously with the second conveyor in the same direction as the second direction.

In this article transfer apparatus, if there is a wall on the right side surface of the second conveyor, the articles fed from the first conveyor can be deterred from flying over the right side surface of the second conveyor. However, because the conveyance surface of the second conveyor advances in the second direction, the articles may rotate about the parts of the articles that touch the wall. Therefore, by using the conveyance surface of the third conveyor to deter rotation of the articles instead of a wall, the articles are kept from rotating about the parts of the articles that touch the conveyance surface of the third conveyor because the conveyance surface of the third conveyor also advances synchronously with the second conveyor in the same direction as the second direction.

An article transfer apparatus of an eleventh aspect is the article transfer apparatus of any one of the first aspect to the tenth aspect, wherein the transport mechanism includes a robot that sucks and holds the article group formed by the second conveyor.

An article transport system of a twelfth aspect includes a plurality of the article transfer apparatus of any one of the first aspect to the eleventh aspect and a moving apparatus that moves the predetermined position. Each of the plural article transfer apparatus transports the article groups to the predetermined position that moves.

### ADVANTAGEOUS EFFECTS OF INVENTION

In the article transfer apparatus of the present disclosure, even in a case where the articles are continuously supplied from the first conveyor, a situation where the transport mechanism is pressed to transport the articles is avoided because the time in which the second conveyor aligns the articles gives the transport mechanism some time to spare. Furthermore, a situation where the articles are not supplied in time to the transport mechanism is also avoided because the article groups comprising aligned pluralities of the articles are accumulated on the second conveyor.

### BRIEF DESCRIPTION OF THE DRAWINGS

FIG. 1 is a schematic perspective view showing configurations of an article transfer apparatus;
FIG. 2 is a control block diagram of the article transfer apparatus;
FIG. 3 is a perspective view of the article transfer apparatus in which an infeed conveyor is seen from an alignment conveyor side in a state in which a surface of the infeed conveyor contacting a bag is instantaneously removed;
FIG. 4 is a front elevation view of the orientation of a bag when the bag drops from the infeed conveyor in a case where the surface of the infeed conveyor contacting the bag is instantaneously removed;
FIG. 5 is a front elevation view of an article transport unit;
FIG. 6A is a schematic side view of the article transport unit collectively holding a plurality of bags;
FIG. 6B is a schematic side view of the article transport unit transporting the plurality of bags to a container;
FIG. 7 is a perspective view of the article transfer apparatus pertaining to an example modification;
FIG. 8A is a plan view showing changes in the orientation of a bag in a case where the bag has approached the infeed conveyor in an orientation where short sides of the bag are parallel to a first direction;
FIG. 8B is a plan view showing changes in the orientation of a bag in a case where the bag has approached the infeed conveyor in an orientation where long sides of the bag are parallel to the first direction;
FIG. 9A is a plan view showing the orientation of a bag after landing on the alignment conveyor; and
FIG. 9B is a plan view showing the orientation of a bag after landing on the alignment conveyor in a case where just a wall 123 is disposed instead of a rotation prevention conveyor of FIG. 9A.

### DETAILED DESCRIPTION

### (1) Configurations of Article Transfer Apparatus 1

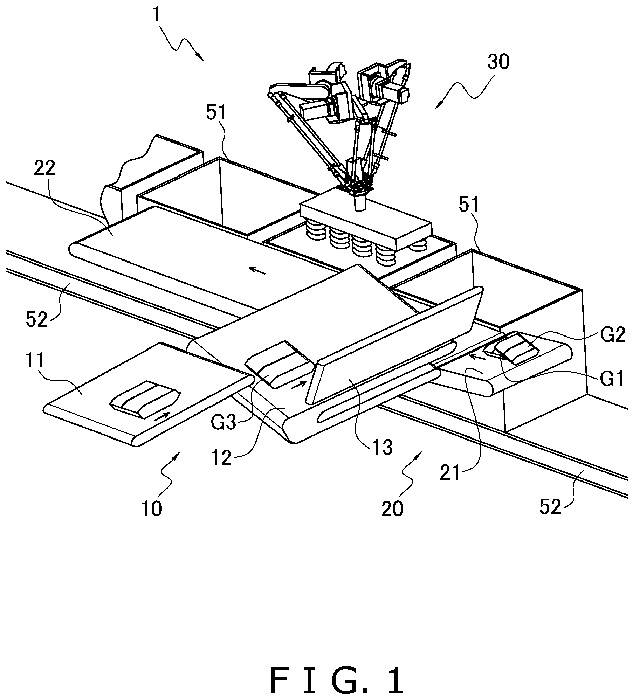

FIG. 1 is a schematic perspective view showing configurations of an article transfer apparatus 1. Referring to FIG. 1, in a process upstream of the article transfer apparatus 1 in a flow of bags G, a weighing apparatus and a bagmaking and packaging machine not shown in the drawings are disposed. To the article transfer apparatus 1 are supplied only bags G that have passed weight, seal, and contamination inspections in the upstream process.

The article transfer apparatus 1 is configured by an article conveyance unit 10, an article alignment unit 20, and an article transport unit 30. The article conveyance unit 10 receives the bags G and conveys them to the article alignment unit 20. The article alignment unit 20 aligns the bags G supplied from the article conveyance unit 10. The article transport unit 30 collectively transports to a container 51 a plurality of the bags G aligned by the article alignment unit 20.

### (1-1) Article Conveyance Unit 10

The article conveyance unit 10 has an article introduction conveyor 11 and an infeed conveyor 12. The article introduction conveyor 11 receives a supply of the bags G that have passed the weight, seal, and contamination inspections and guides the bags G to the infeed conveyor 12.

The infeed conveyor 12 conveys the bags G conveyed thereto from the article introduction conveyor 11 to the article alignment unit 20.

### (1-2) Article Alignment Unit 20

The article alignment unit 20 has an alignment conveyor 21 and an outfeed conveyor 22. Each time the alignment conveyor 21 catches one bag G, it conveys that bag G a fixed distance toward the outfeed conveyor 22.

Therefore, the bag G moves the fixed distance closer to the outfeed conveyor 22 from the position where it dropped. A part of the bag G that comes dropping thereafter lands on the alignment conveyor 21 while the remaining part inclines against the preceding bag G. Therefore, the bags G on the alignment conveyor 21 form a line in such a way that mutually adjacent bags partially lie on top of each other.

After the bag G at the rear of the line lands on the alignment conveyor 21, the alignment conveyor 21 and the outfeed conveyor 22 simultaneously start operating, and the alignment conveyor 21 and the outfeed conveyor 22 perform a conveyance operation in the same direction. N-number of the bags G aligned in a line on the alignment conveyor 21 move as one article group to the outfeed conveyor 22, and the article group that was already on the outfeed conveyor 22 further advances on the outfeed conveyor 22.

### (1-3) Article Transport Unit 30

The article transport unit 30 is a parallel link robot having three sets of links. The article transport unit 30 picks up the article group of the bags G that have been conveyed thereto on the outfeed conveyor 22 and moves in a horizontal direction to the area over the container 51. When the article transport unit 30 reaches the area over the container, it transfers the article group to the inside of the container 51.

### (1-4) Control Unit 40

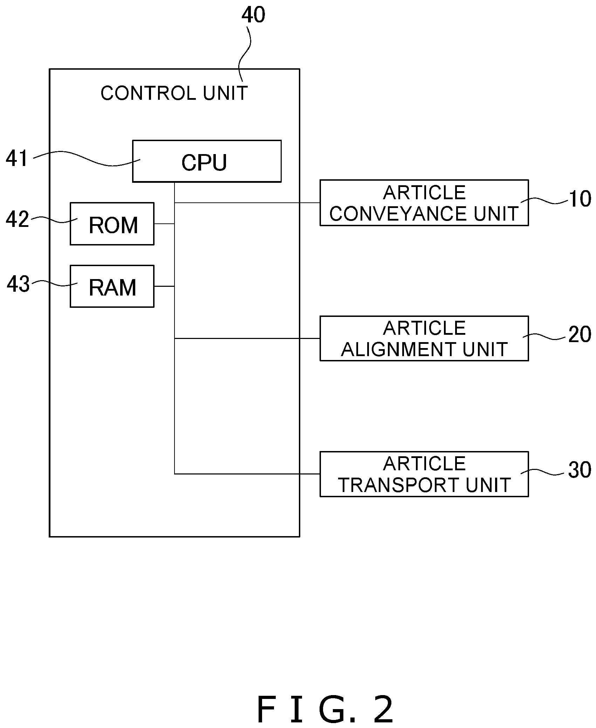

FIG. 2 is a control block diagram of the article transfer apparatus 1. Referring to FIG. 2, a control unit 40 controls operations of drive parts of the article conveyance unit 10, the article alignment unit 20, and the article transport unit 30 of the article transfer apparatus 1. The control unit 40 includes a CPU 41 and a ROM 42 and a RAM 43 that are connected to the CPU 41.

### (2) Cooperation between Infeed Conveyor 12 and Alignment Conveyor 21

The infeed conveyor 12 and the alignment conveyor 21 are arranged in such a way that their conveyance directions are orthogonal to each other. Each time the alignment conveyor 21 catches one bag G, it conveys that bag G a fixed distance toward the outfeed conveyor 22, so a part of the bag G lands on the alignment conveyor 21 and the remaining part inclines against the preceding bag G, and the bags G form a line in such a way that mutually adjacent bags partially lie on top of each other.

Furthermore, when a bag G drops in a horizontal orientation, the trailing bag G sometimes bounces in a direction different from its intended position because it drops directly on the upper surface of the bag G that is standing by. To inhibit this, the present embodiment takes measures to ensure that the bags have an orientation suited for landing on the alignment conveyor 21.

### (2-1) Inclination of Infeed Conveyor 12

The conveyance surface of the infeed conveyor 12 is inclined relative to a horizontal plane. Specifically, the orientation of each of the bags G when switching from the infeed conveyor 12 to the alignment conveyor 21 is inclined in such a way that the part of the bag G that lands on the bag G already placed on the alignment conveyor 21 is up and the part of the bag G that lands directly on the alignment conveyor 21 is down.

Therefore, the bags G land on the alignment conveyor 21 before or at the same time that they contact the bags G placed before them. Additionally, the frictional force between the alignment conveyor 21 and the bags G exceeds the frictional force between the bags G, so slippage between the bags G is prevented and a disturbance in orientation is inhibited.

On the lower end in the direction of inclination of the infeed conveyor 12 is provided a support conveyor 13 that supports and prevents the bags G from falling off and guides the bags G in the conveyance direction. The conveyance surface of the support conveyor 13 and the conveyance surface of the infeed conveyor 12 are orthogonal to each other.

The bags G moving on the upper side in the direction of inclination on the conveyance surface of the infeed conveyor 12 are subjected to a component of the force of gravity along the direction of inclination, so they move while sliding downward toward the support conveyor 13 and thereafter move along the support conveyor 13. The conveyance surface of the support conveyor 13 moves along the advancing direction of the conveyance surface of the infeed conveyor 12 so as to not hinder the conveyance of the bags G.

### (2-2) Extension and Retraction of Leading End Portion of Infeed Conveyor 12

In the present embodiment, when the bags G reach the leading end portion of the infeed conveyor 12, the surface of the infeed conveyor 12 contacting the bags G is instantaneously removed, whereby the bags G drop while maintaining the orientation that they had while they were being conveyed.

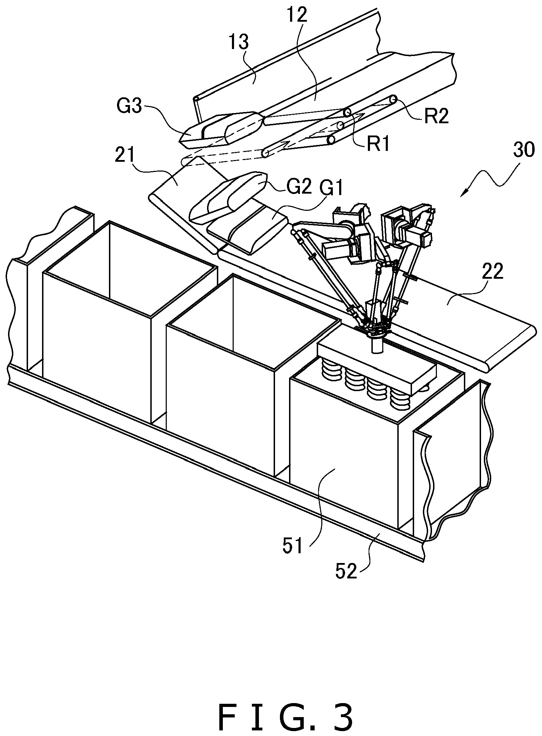

FIG. 3 is a perspective view of the article transfer apparatus 1 in which the infeed conveyor 12 is seen from the alignment conveyor 21 side in a state in which the surface of the infeed conveyor 12 contacting a bag G is instantaneously removed.

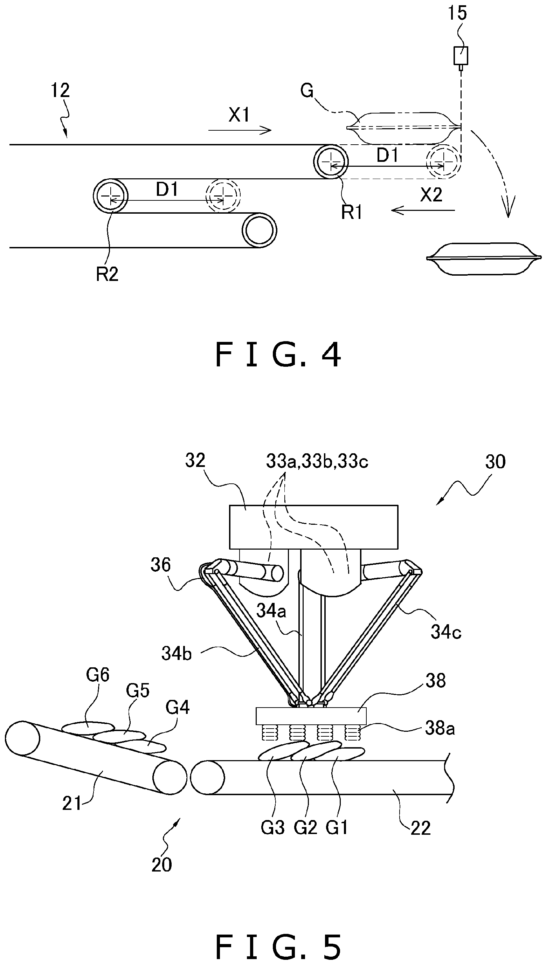

FIG. 4 is a front elevation view of the orientation of a bag G when the bag G drops from the infeed conveyor 12 in a case where the surface of the infeed conveyor 12 contacting the bag G is instantaneously removed.

Referring to FIG. 3 and FIG. 4, when a bag G is conveyed to the downstream side of the infeed conveyor 12 and a position sensor 15 detects that the leading end portion of the bag G has reached the leading end portion of the infeed conveyor 12, a leading end portion roller R1 of the infeed conveyor 12 moves a distance D1 in a direction X2 opposite the conveyance direction (a first direction X1). At this time, an intermediate roller R2 of the infeed conveyor 12 also moves the distance D1 in the direction X2 in conjunction therewith, thereby absorbing slack in the conveyor belt when the leading end portion roller R1 moves in the direction X2.

Because the leading end portion of the infeed conveyor 12 instantaneously moves to the upstream side of the bag G, the bag G suddenly loses the drag from the conveyance surface of the infeed conveyor 12 but due to inertia maintains the orientation that it had while it was being conveyed.

Therefore, the bag G easily maintains its orientation when it leaves the infeed conveyor 12, and a disturbance in orientation when the bag G lands on the alignment conveyor 21 is inhibited.

### (3) Details of Article Transport Unit 30

FIG. 5 is a front elevation view of the article transport unit 30. Referring to FIG. 5, the article transport unit 30 includes a base 32, three servomotors 33a, 33b, 33c, parallel link arms 34a, 34b, 34c, and a suction holder 38. The article transport unit 30 is a robot configured by these.

### (3-1) Base 32

As shown in FIG. 5, the base 32 is positioned over the outfeed conveyor 22 or the container 51 (see FIG. 3). The base 32 holds under it the three servomotors 33a, 33b, 33c at equal distances from each other.

### (3-2) Parallel Link Arms 34a, 34b, 34c

Upper ends of the parallel link arms 34a, 34b, 34c are coupled to output shafts of the servomotors 33a, 33b, 33c, and lower ends are coupled to the suction holder 38. The parallel link arms 34a, 34b, 34c extend from the output shafts of the servomotors 33a, 33b, 33c to the suction holder 38.

During operation of the article transport unit 30, the amounts of rotation and the directions of rotation of the output shafts of the servomotors 33a, 33b, 33c are appropriately controlled so that the lower ends of the parallel link arms 34a, 34b, 34c move in the horizontal direction and the vertical direction and the suction holder 38 moves to arbitrary positions in a fixed three-dimensional space.

### (3-3) Suction Holder 38

The suction holder 38 has a plurality of suction pads 38a on its lower portion. The suction pads 38a are connected to a suction tube 36 extending from a vacuum pump or a vacuum blower (not shown in the drawings) and switch between a state in which they suck and hold the bags G and a state in which suction is canceled. Due to the suction of the article groups by the suction pads 38a and the cancelation of the suction, the suction holder 38 can both grab hold of and release the article groups.

Specifically, as shown in FIG. 5, the suction holder 38 collectively grabs hold of a bag G1, a bag G2, and a bag G3 on the outfeed conveyor 22, the parallel link arms 34a, 34b, 34c raise and planarly move the suction holder 38, and the suction by the suction holder 38 is canceled over the container 51. Because of this, the bag G1, the bag G2, and the bag G3 disengage from the suction holder 38 and are transferred into the container.

While the bag G1, the bag G2, and the bag G3, which are a first article group, are being transported, a bag G4, a bag G5, and a bag G6, which are a subsequent second article group, are already standing by on the alignment conveyor 21. A gap along the conveyance direction is ensured between the first article group and the second article group, so when the article transport unit 30 transports the first article group, the bag G4, the bag G5, and the bag G6 of the second article group are kept from being sucked by the suction holder 38.

### (4) Operations of Article Transfer Apparatus 1

Here, operations will be described supposing a state in which the bag G1, the bag G2, and the bag G3 that have passed the inspections have been introduced from upstream to the article introduction conveyor 11 and are being sequentially supplied to the infeed conveyor 12.

The infeed conveyor 12 conveys toward the alignment conveyor 21 the bag G1 supplied from the article introduction conveyor 11. When the leading end portion of the bag G1 reaches the leading end portion of the infeed conveyor 12, the leading end portion of the infeed conveyor 12 instantaneously moves the distance D1 in the direction X2 opposite the first direction X1 as shown in FIG. 4.

The bag G1 lands on the alignment conveyor 21 while maintaining the orientation it had just before the surface of the infeed conveyor 12 contacting the bag G1 was removed. When there is no preceding bag on the alignment conveyor 21, the bag G1 becomes the front of the line on the alignment conveyor 21. For convenience of description, the bag G1 will be described as the front of the line.

When the alignment conveyor 21 catches the bag G1, it conveys the bag G1 the fixed distance toward the outfeed conveyor 22 and waits to receive the trailing bag G2.

Next, when the leading end portion of the bag G2 reaches the leading end portion of the infeed conveyor 12, the surface of the infeed conveyor 12 contacting the bag G2 is instantaneously removed and the bag G2 also lands on the alignment conveyor 21 while maintaining the orientation it has at that time.

The infeed conveyor 12 is inclined in such a way that the part of the bag G2 that lands on the bag G1 already placed on the alignment conveyor 21 is up and the part of the bag G2 that lands directly on the alignment conveyor 21 is down, so the bag G2 drops while maintaining its inclined orientation, a part of the bag G2 lands on the bag G1, and the remaining part of the bag G2 lands on the alignment conveyor 21.

When the alignment conveyor 21 catches the bag G2, it conveys the bag G1 and the bag G2 the fixed distance toward the outfeed conveyor 22 and waits to receive the trailing bag G3.

Next, when the leading end portion of the bag G3 reaches the leading end portion of the infeed conveyor 12, the surface of the infeed conveyor 12 contacting the bag G3 is instantaneously removed and the bag G3 also lands on the alignment conveyor 21 while maintaining the orientation it has at that time. A part of the bag G3 lands on the bag G2 while the remaining part lands on the alignment conveyor 21. FIG. 3 shows the bag G3 just after the surface of the infeed conveyor 12 contacting the bag G3 is instantaneously removed.

The bag G1, the bag G2, and the bag G3 on the alignment conveyor 21 form a line in which mutually adjacent bags partially lie on top of each other. When the line of the bag G1, the bag G2, and the bag G3 is finished, the alignment conveyor 21 conveys the line as one article group to the outfeed conveyor 22. At this time, the outfeed conveyor 22 also operates in the same direction, so the article group on the alignment conveyor 21 moves onto the outfeed conveyor 22. If there is a preceding article group on the outfeed conveyor 22, that article group moves further downstream.

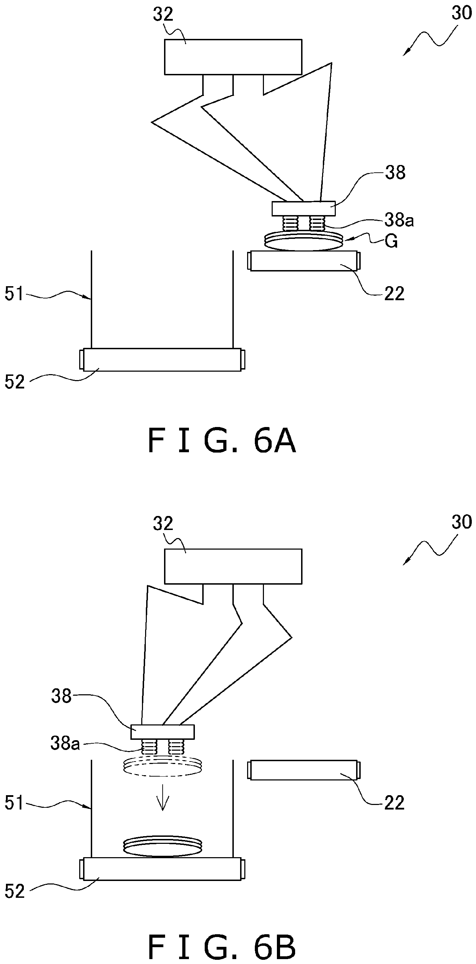

FIG. 6A is a schematic side view of the article transport unit 30 collectively holding a plurality of bags G. Furthermore, FIG. 6B is a schematic side view of the article transport unit 30 transporting the plurality of bags G to a container 51.

Referring to FIG. 6A and FIG. 6B, the suction holder 38 of the article transport unit 30 collectively sucks the plurality of bags G in the article group moving thereto on the outfeed conveyor 22, transports them to the container 51, and transfers them into the container 51. The container 51 is moved to a subsequent position by a container conveyor 52 each time an article group is dropped.

The article transfer apparatus 1 repeats the above operations to pack the necessary bags G in the container 51. In the article transfer apparatus 1, the alignment conveyor 21 of the article alignment unit 20 supplies to the outfeed conveyor 22 the article group in which a plurality of the bags G are aligned, so the suction holder 38 of the article transport unit 30 can collectively transfer to the container 51 the plurality of bags G in the article group.

Therefore, even in a case where the bags G are continuously supplied from the article conveyance unit 10, a situation where the article transport unit 30 is pressed to transport the bags G is avoided because the time in which the article alignment unit 20 aligns the bags G gives the article transport unit 30 some time to spare. Furthermore, a situation where the article groups are not supplied in time to the article transport unit 30 is also avoided because the article groups of the aligned bags G are temporarily retained on the alignment conveyor 21 and the outfeed conveyor 22.

### (5) Example Modification

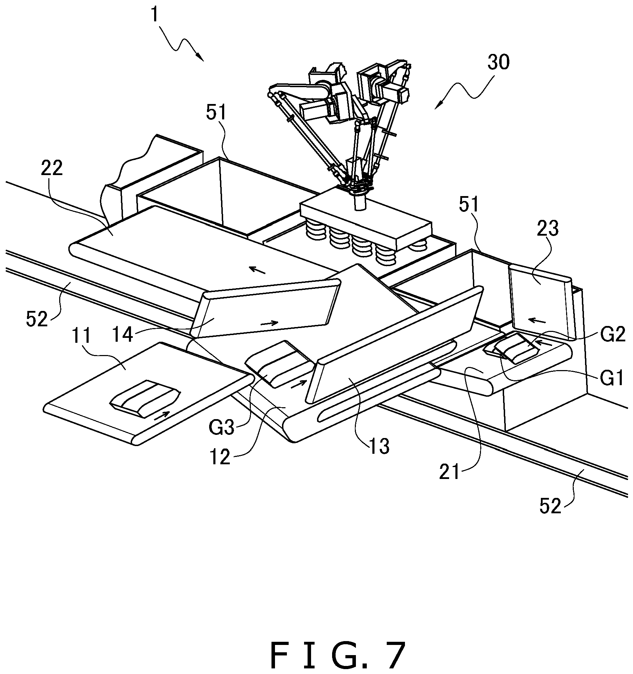

FIG. 7 is a perspective view of the article transfer apparatus 1 pertaining to an example modification. Referring to FIG. 7, the article transfer apparatus 1 has a configuration where two conveyors 14, 23 having different functions are added to the article transfer apparatus 1 of FIG. 1.

Configurations other than these two conveyors 14, 23 are the same as those of the article transfer apparatus 1 of FIG. 1, so identical names and reference signs are added thereto and description of those configurations is omitted.

The conveyor 14 changes the orientation of the bags G in the article conveyance unit 10. Hereinafter, the conveyor 14 will be called the orientation changing conveyor 14. The conveyor 23 prevents the bags G from rotating in the article alignment unit 20. Hereinafter, the conveyor 23 will be called the rotation prevention conveyor 23.

### (5-1) Orientation Changing Conveyor 14

The orientation changing conveyor 14 is disposed on the infeed conveyor 12. The conveyance surface of the orientation changing conveyor 14 and the conveyance surface of the infeed conveyor 12 are orthogonal to each other. The orientation changing conveyor 14 opposes the support conveyor 13 disposed on the conveyance surface of the infeed conveyor 12.

However, when the orientation changing conveyor 14 is seen using the conveyance surface of the infeed conveyor 12 as a front elevation, the downstream end of the orientation changing conveyor 14 in the conveyance direction is in a position nearer to the support conveyor 13 than the upstream end.

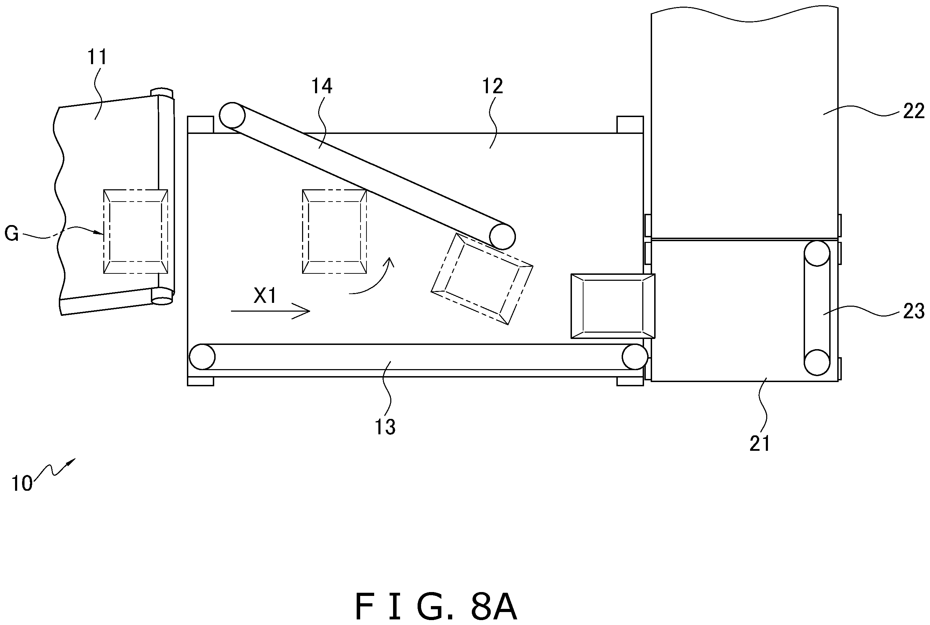

FIG. 8A is a plan view showing changes in the orientation of a bag G in a case where the bag G has approached the infeed conveyor 12 in an orientation where short sides of the bag G are parallel to the first direction X1. Referring to FIG. 8A, when the bag G contacts the orientation changing conveyor 14, the bag G rotates in the counterclockwise direction about the point of contact and the orientation of the bag G changes so that long sides of the bag G are oriented obliquely downward along the orientation changing conveyor 14. Thereafter, the bag G hits the support conveyor 13, changes orientation so that the long sides of the bag G are along the support conveyor 13, and heads to the alignment conveyor 21.

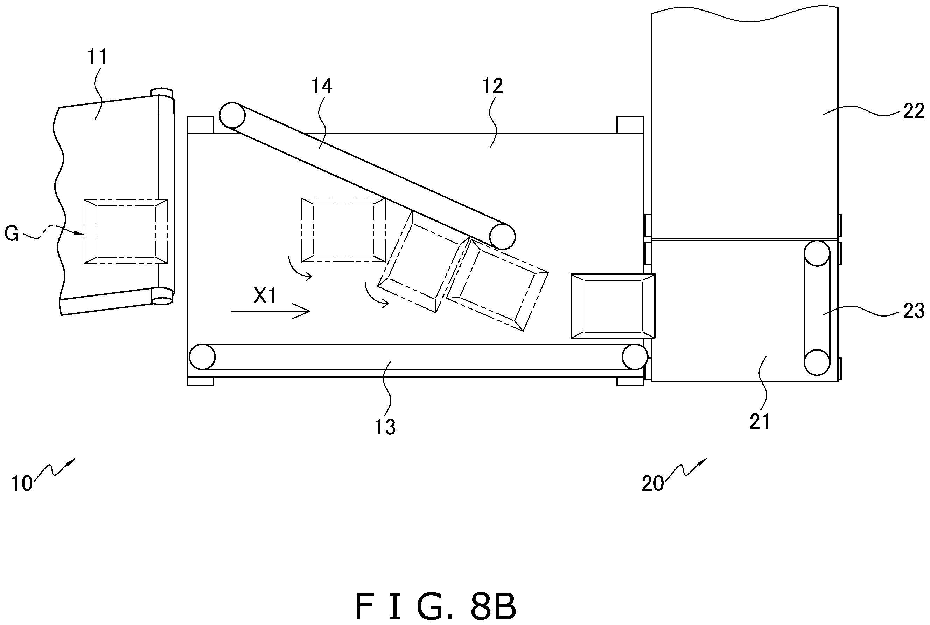

FIG. 8B is a plan view showing changes in the orientation of a bag G in a case where the bag G has approached the infeed conveyor 12 in an orientation where the long sides of the bag G are parallel to the first direction X1. Referring to FIG. 8B, when the bag G contacts the orientation changing conveyor 14, the bag G rotates in the counterclockwise direction about the point of contact and the orientation of the bag G changes so that the short sides of the bag G are oriented obliquely downward along the orientation changing conveyor 14.

The moment acting on the long sides of the bag G is greater than the moment acting on the short sides of the bag G, so the bag G cannot advance with its short sides along the orientation changing conveyor 14. Therefore, the bag G rotates more, and the orientation of the bag G changes so that the long sides of the bag G are oriented obliquely downward along the orientation changing conveyor 14. Then, the bag G hits the support conveyor 13, changes orientation so that the long sides of the bag G are along the support conveyor 13, and heads to the alignment conveyor 21.

### (5-2) Rotation Prevention Conveyor 23

As shown in FIG. 7, FIG. 8A, and FIG. 8B, the rotation prevention conveyor 23 is disposed in a substantially vertical orientation, so as to oppose the terminal end of the infeed conveyor 12, along the side surface of the alignment conveyor 21 that is positioned further downstream (the far side from the terminal end of the infeed conveyor 12) in the conveyance direction (the first direction X1) of the infeed conveyor 12 among the two side surfaces of the alignment conveyor 21.

Furthermore, the bags G that have lost the drag from the infeed conveyor 12 are given a velocity component in the first direction X1 as shown in FIG. 4, so they drop while moving closer to the side surface of the alignment conveyor 21 that is on the far side from the terminal end of the infeed conveyor 12 among the two side surfaces of the alignment conveyor 21.

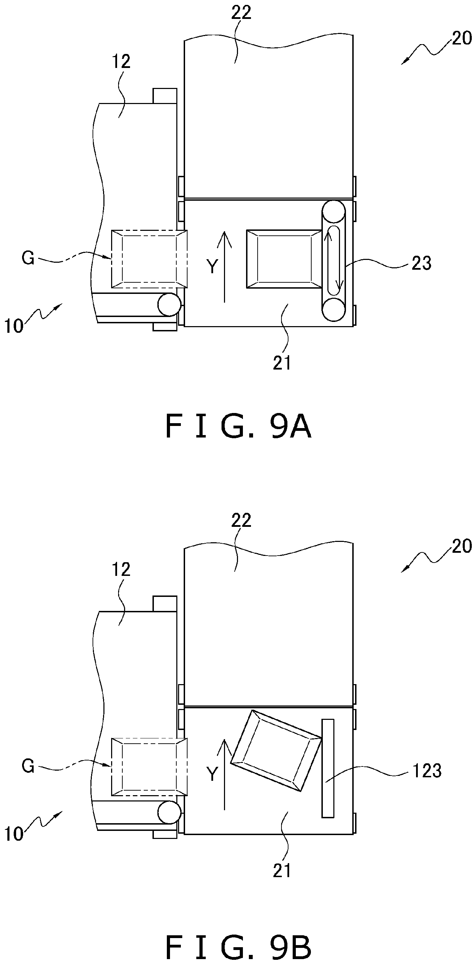

FIG. 9A is a plan view showing the orientation of a bag G after landing on the alignment conveyor 21. Referring to FIG. 9A, when the bag G lands on the alignment conveyor 21, it lands in such a way that a short side of the bag G hits the rotation prevention conveyor 23 and that short side is substantially along the conveyance surface of the rotation prevention conveyor 23.

The conveyance surface of the rotation prevention conveyor 23 advances synchronously with the alignment conveyor 21 at the same speed as the conveyance surface of the alignment conveyor 21 in a second direction Y that is the conveyance direction of the alignment conveyor 21. Therefore, the short side of the bag G contacting the conveyance surface of the rotation prevention conveyor 23 and the short side of the bag G not contacting the conveyance surface of the rotation prevention conveyor 23 advance at the same speed, so rotation of the bag G is avoided.

Suppose a case where, for example, just a wall 123 is merely disposed instead of the rotation prevention conveyor 23 as in FIG. 9B. In this case, frictional resistance between the wall 123 and the short side of the bag G contacting the wall 123 hinders the advance of that short side, so the short side of the bag G not contacting the wall 123 advances more quickly. As a result, the bag G rotates about the point of contact between the wall 123 and the short side contacting the wall 123, thereby disturbing the alignment of the bag G.

Consequently, the rotation prevention conveyor 23 prevents rotation of the bags G and does not just merely guide the bags G so that the short sides of the bags G are along the second direction Y.

### (6) Characteristics

(6-1)
The article transfer apparatus 1 includes the infeed conveyor 12, the alignment conveyor 21, and the article transport unit 30. The infeed conveyor 12 conveys the bags G in the first direction X1. The alignment conveyor 21 lines up in a predetermined state a plurality of the bags G fed thereto from the infeed conveyor 12 to form an article group and simultaneously conveys them in the second direction Y The article transport unit 30 transports the article group to the container 51. A plurality of the article groups are formed on the alignment conveyor 21.

In the article transfer apparatus 1, even in a case where the bags G are continuously supplied from the infeed conveyor 12, a situation where the article transport unit 30 is pressed to transport the bags G is avoided because the time in which the alignment conveyor 21 aligns the bags G gives the article transport unit 30 some time to spare. Furthermore, a situation where the bags G are not supplied to the article transport unit 30 in time is also avoided because the article groups comprising aligned pluralities of the bags G are temporarily retained on the alignment conveyor 21.

(6-2)
The article transport unit 30 collectively sucks and transports to the container 51 the plurality of bags G configuring the article group. Therefore, there is not the conventional operation of gripping the articles one at a time and lining them up on a conveyor, and the article transport unit 30 collectively transports the plurality of bags G in the article group formed by the alignment conveyor 21, so there are a fewer number of transports by the article transport unit 30, and processing capacity is high.

(6-3)
The first article group comprising the bag G1, the bag G2, and the bag G3 and the second article group comprising the bag G4, the bag G5, and the bag G6 are formed on the alignment conveyor 21 as the article groups. The first article group is transported first by the article transport unit 30. The second article group is transported by the article transport unit 30 after the first article group has been transported.

In the article transfer apparatus 1, the article group transported next is temporarily retained on the alignment conveyor 21, so the article groups can be supplied at stable intervals to the article transport unit 30.

(6-4)
A gap along the second direction Y is formed between the first article group and the second article group, so when the article transport unit 30 transports the first article group, the bag G4, the bag G5, and the bag G6 in the second article group are kept from being sucked by the suction holder 38.

(6-5)
Each time the alignment conveyor 21 catches one of the bags G fed thereto from the infeed conveyor 12, it conveys that bag G a predetermined distance in the second direction Y The plural bags G line up in a state in which a part of a trailing bag G contacts the conveyance surface of the alignment conveyor 21 while the remaining part inclines against a preceding bag G to form an article group. Therefore, during transport, the article transport unit 30 can collectively suck and transport to the container 51 the plurality of bags G configuring the article group.

(6-6)
When the bags G switch from the leading end portion of the infeed conveyor 12 to the alignment conveyor 21, the control unit 40 changes the leading end portion of the infeed conveyor 12 to a state in which it is retracted in the direction X2 opposite the first direction X1, so the infeed conveyor 12 that had supported the lower surfaces of the bags G is retracted and removed, and the bags G land on the alignment conveyor 21 while maintaining the orientation they have during the switch without having any time to incline. As a result, a disturbance in orientation is inhibited.

(6-7)
The infeed conveyor 12 and the alignment conveyor 21 are arranged in such a way that their conveyance directions intersect each other, so the conveyance directions can be inhibited from becoming longer in the same direction.

(6-8)
The infeed conveyor 12 and the alignment conveyor 21 are arranged in such a way that their conveyance directions are orthogonal to each other. The conveyance surface of the infeed conveyor 12 is inclined relative to a horizontal plane, and the orientation of each of the bags G when switching from the infeed conveyor 12 to the alignment conveyor 21 is inclined in such a way that the part of the bag G that lands on the bag G already placed on the alignment conveyor 21 is up and the part of the bag G that lands directly on the alignment conveyor 21 is down. The bags G land on the alignment conveyor 21 before or at the same time that they contact the bags G placed before them. The frictional force between the alignment conveyor 21 and the bags G exceeds the frictional force between the bags G, so slippage between the bags G is prevented and a disturbance in orientation is inhibited.

(6-9)
The orientation changing conveyor 14 can change the orientation of the bags G to a predetermined orientation regardless of the orientation of the bags G when they come onto the infeed conveyor 12. As a result, the operation where the alignment conveyor 21 lines up a plurality of the bags G in a state in which they form a line in such a way that mutually adjacent bags partially lie on top of each other to form an article group becomes easy.

(6-10)
The rotation prevention conveyor 23 is disposed in a substantially vertical orientation, so as to oppose the terminal end of the infeed conveyor 12, along the side surface of the alignment conveyor 21 that is far from the terminal end of the infeed conveyor 12 downstream in the first direction X1 of the infeed conveyor 12 among the side surfaces of the alignment conveyor 21. The conveyance surface of the rotation prevention conveyor 23 advances synchronously with the alignment conveyor 21 in the same direction as the second direction Y. Therefore, the bags G are kept from rotating about the parts of the bags G that touch the conveyance surface of the rotation prevention conveyor 23.

(6-11)
The article transport unit 30 is a robot that sucks and holds the article groups formed by the alignment conveyor 21.

### (7) Other Embodiments

In the above embodiment and example modification, a configuration where the one article transfer apparatus 1 transfers article groups of the bags G to the movable container 51 was described.

However, the disclosure is not limited to this configuration, and it is also possible to construct an article transport system where a plurality of the article transfer apparatus 1 are arranged in parallel and the container conveyor 52 delivers the container 51 to each article transfer apparatus 1 so that different article groups are transferred from each article transfer apparatus 1 to one container 51.

### REFERENCE SIGNS LIST

- 1: Article Transfer Apparatus
- 12: Infeed Conveyor (First Conveyor)
- 14: Orientation Changing Conveyor (Orientation Changing Unit)
- 21: Alignment Conveyor (Second Conveyor)
- 23: Rotation Prevention Conveyor (Third Conveyor)
- 30: Article Transport Unit (Transport Mechanism)
- 40: Control Unit
- 51: Container (Predetermined Position)
- 52: Container Conveyor (Moving Apparatus)
- X1: First Direction
- Y: Second Direction
- G: Bags
- G1, G2, G3: First Article Group
- G4, G5, G6: Second Article Group

### CITATION LIST

### PATENT LITERATURE

Patent Document 1: JP-A No. 2017-154781

## Claims

1. An article transfer apparatus comprising:
a first conveyor that conveys articles in a first direction;
a second conveyor that lines up in a predetermined state a plurality of the articles fed thereto from the first conveyor to form an article group and simultaneously conveys them in a second direction; and
a transport mechanism that transports the article group to a predetermined position,
wherein a plurality of the article groups are formed on the second conveyor.

2. The article transfer apparatus of claim 1, wherein the transport mechanism collectively grips and transports to the predetermined position the plurality of articles configuring the article group.

3. The article transfer apparatus of claim 1 or claim 2, wherein a first article group transported first by the transport mechanism and a second article group transported by the transport mechanism after the first article group has been transported are formed on the second conveyor as the article groups.

4. The article transfer apparatus of claim 3, wherein a gap along the second direction is formed between the first article group and the second article group.

5. The article transfer apparatus of any one of claims 1 to 4, wherein each time the second conveyor catches one of the articles fed thereto from the first conveyor, it conveys that article a predetermined distance in the second direction to thereby line up a plurality of the articles in the predetermined state.

6. The article transfer apparatus of any one of claims 1 to 5, further comprising a control unit that controls operations of the first conveyor and the second conveyor, wherein
a leading end portion of the first conveyor in the first direction extends and retracts parallel to the first direction, and
when the articles switch from a first position on the first conveyor to the second conveyor, the control unit changes the leading end portion of the first conveyor to a state in which it is retracted upstream of the first position in the first direction.

7. The article transfer apparatus of any one of claims 1 to 6, wherein the first conveyor and the second conveyor are arranged in such a way that the first direction and the second direction intersect each other.

8. The article transfer apparatus of any one of claims 1 to 7, wherein
the first conveyor and the second conveyor are arranged in such a way that the first direction and the second direction are orthogonal to each other, and
the conveyance surface of the first conveyor is inclined relative to a horizontal plane in such a way that, when the articles switch from the first conveyor to the second conveyor, a plane including longitudinal and transverse directions of the articles is inclined about an axis of rotation along the first direction relative to the conveyance surface of the second conveyor, so that the orientation of each of the articles when switching from the first conveyor to the second conveyor is inclined in such a way that a part of the article that lands on the article already placed on the second conveyor is up and a part of the article that lands directly on the second conveyor is down.

9. The article transfer apparatus of any one of claims 1 to 8, further comprising an orientation changing unit which, by contacting the articles, changes to a predetermined orientation the orientation of the articles as they are being conveyed on the first conveyor.

10. The article transfer apparatus of claim 7, further comprising a third conveyor, wherein
the third conveyor is disposed in a substantially vertical orientation, so as to oppose a terminal end of the first conveyor, along a side surface of the second conveyor that is positioned further downstream in the conveyance direction of the first conveyor among side surfaces of the second conveyor, and
the conveyance surface of the third conveyor advances synchronously with the second conveyor in the same direction as the second direction.

11. The article transfer apparatus of any one of claims 1 to 10, wherein the transport mechanism includes a robot that sucks and holds the article group formed by the second conveyor.

12. An article transfer system comprising:
A plurality of the article transfer apparatus of any one of claims 1 to 11; and
a moving apparatus that moves the predetermined position,
wherein each of the plural article transfer apparatus transports the article groups to the predetermined position that moves.
